# EUROPEAN PATENT SPECIFICATION

(11) **EP 2 141 353 B1**
(45) Date of publication and mention of the grant of the patent: **29.07.2015**
(21) Application number: 08761455.8
(22) Date of filing: 04.04.2008
(51) Int. Cl.: F03B 13/26, B63B 35/44, B63B 21/50

(54) **SUBMERGIBLE SYSTEM FOR EXPLOITING THE ENERGY OF MARINE CURRENTS**
UNTERWASSERSYSTEM ZUR NUTZBARMACHUNG DER ENERGIE VON GEZEITENSTRÖMEN
SYSTÈME SUBMERSIBLE POUR EXPLOITER L'ÉNERGIE DES COURANTS MARINS

(30) Priority: 12.04.2007 ES 200700985
(43) Date of publication of application: 06.01.2010
(73) Proprietor: Universidad Politécnica de Madrid, 28040 Madrid (ES)
(72) Inventor: LÓPEZ PIÑERO, Amable, E-28040 Madrid (ES)
(74) Representative: Carvajal y Urquijo, Isabel
(86) International application number: PCT/ES2008/000207
(87) International publication number: WO 2008/125707

(56) References cited:
- WO-A1-03/006825
- WO-A1-2006/061652
- GB-A- 2 256 011
- GB-A- 2 256 011
- GB-A- 2 348 249
- US-A- 4 524 285
- US-A1- 2002 158 472
- US-A1- 2003 193 198
- US-A1- 2006 261 597

## Description

### Technical field

This invention related to the offshore technology scientific sector and also to the sub-sector named "electrical energy production plants from renewable energies".

### Background art

Currently, there is a strong interest in harnessing renewable energy, that within the marine field focus on the following types of plants:
- Aeolian
- Hydrothermal
- Of the waves
- Of the current

The use of energy currents, both constant and seasonal of thermal origin such as those produced by tides (2 by day cycle and gravitational origin), is attracting particular interest for its great potential for development.

The most widely used design consists on a fixed structure to the bottom on fixing over it the generators (electric type), driven by large-bladed propellers slender, similar to the wind generators.

The structure main part is submerged (including generators and propellers), towering above the sea surface a small part, allowing access into the plant and eventually to the lifting of the active elements for maintenance largest.

With this design the depth of the zone of operation is limited, being suitable only for pre-continental sea type as the North Sea. Not being possible to use these plants with layer of water over 100 m as, for example, in the Gibraltar Strait.

The solution suggested so far for the use of generators in deeper seas, is the use of controlled buoyancy underwater generators composed of a cylindrical body which houses the generator. On the front has a system for attaching it to a rope or chain joined to the sea bottom elastically through an anchoring system similar to that used on offshore platforms. On the back it is positioned a propeller that is moved by sea current.

This system has two problems: The difficulty of counteract the torque reaction on the generator and the problem of how to perform maintenance on a system that is submerged.

To overcome these problems, the company Hydrovisión (United Kingdom) has developed a design with 2 propellers rotating in opposite direction, joining two generators with a strut of great length. The plant may come to the surface ballasting the set and dropping the anchor rope, to perform maintenance tasks.

Document US4524285 discloses a hydro-current energy converter, a device for capturing the energy of a natural stream of flowing water, and converting it into electric power. The device has a rotor for driving the generator, which has blades and rigidly affixed vanes disposed at approximately forty-five degrees to the rotor.

The industrial application is clear because there are other submarine prototype generators that are being tested and an important development of offshore wind farms.

### Disclosure and summary of invention

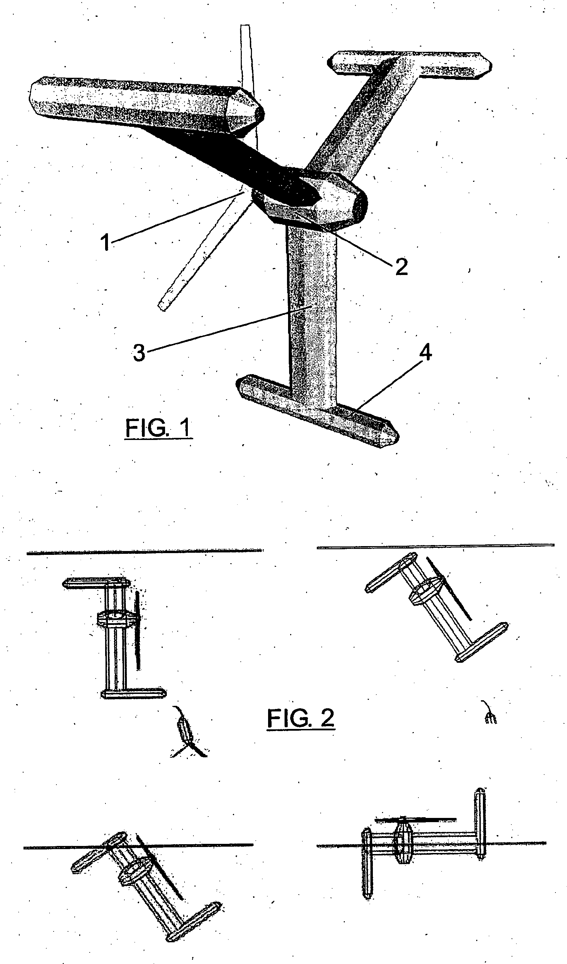

The invention is a submergible electric energy generation unit for exploiting the energy of marine currents, shown in figure 1, which comprises a rotor or screw with several blades that move an electric generator, located in a central pod or dome.

From the pod starts on radial direction a star composed by several arms or columns, located in a plane perpendicular to the rotor's axis. Every arm is ended with a float or torpedo, having an axis parallel to the rotor's one.

All this elements will be immersed in the current flow. They will have a hydronamic shape in order to reduce their viscous and pressure forces, in order to minimize the drag forces that will be supported by the mooring system.

The set of related elements makes a "generation unit" or generator. Putting an array of these units on a sea location in order to extract the current energy, it could be made an "underwater generators field" in order to share the control unit the electronic converters and the energy evacuation lines to land.

Starting with this base design, it could be designed different versions, modifying the arm's length (bigger or minor than blade's one), the volume distribution between torpedoes and arms, their relative position (torpedo centre aligned with arm or moved on current direction) and the tree main dimension of every element.

The generator will have a hydrostatic balance, in order that the final weight will be lesser than the water volume. This difference will be compensated by the mooring system.

The weights and buoyancy forces distribution will made in order that the torque reaction and the tilt momentum will be compensated by hydrostatics' ones. The system will be linked to the sea bottom with mooring ropes.

The weights and buoyancy forces distribution could be modified with a tele-controled water ballast system, with pumps, valves and blowing air tanks. This system will have an automatic control system remotely supervised with underwater acoustic on cable data links. In operation situation in the down arm and torpedo, the weight will be bigger than buoyancy force and in the upper ones we will have the reverse state.

With this distribution the generator weight centre will be down than the volume centre, this "methacentric height" will produce the stabilizing momentums needs to maintain the vertical position show in draw 1, that is the optimum ones for rotor work, due the marine currents have a mainly horizontal component.

With this disposition we compensate, in a simple mode, the turn torque caused by the mechanical reaction on the generator and also the tilt torque that exists if the application of the mooring force isn't equilibrated on the pod axis.

Draining the water ballast tanks the generator will have whole plus buoyancy and freeing the mooring system, the generator will move to the sea surface and when the centre of weight and volume will be in the same position, the generator will exit from water in horizontal attitude, as show on draw 2.

For the generator deployment from the floating horizontal location to the vertical immersed one, we only need to reverse the procedure sequence.

These procedures for operation deployment an maintenance on flotation, should made with reduced current speed and aided with tele-operated system for locking and unlocking the links between the generator and the mooring system that can use a "guide rope".

Controlling the position between the centre of weight an of volume, is feasible to turn the ensemble in that form that in surface position will stay with the rotor up, in order to a easier maintenance of it, or with the rotor down and the free pod end outside the water in order to access to inside.

The star arms design, disposed like radius starting on the pod, lets a easy access on flotation with small ships or boats and also get a good stability. Putting the same number of blades and arms, it is feasible to stow it with the same orientation, increasing the access area, the protection of the more sensible elements of the device and simplifying the transport, deployment and maintenance works.

The ensemble can be positioned on the sea with different mooring designs, like: the engagement with a rope linked in the free pod and working the rotor downstream of the structure, linking with various points on the torpedoes ends or linking in the lower torpedo end.

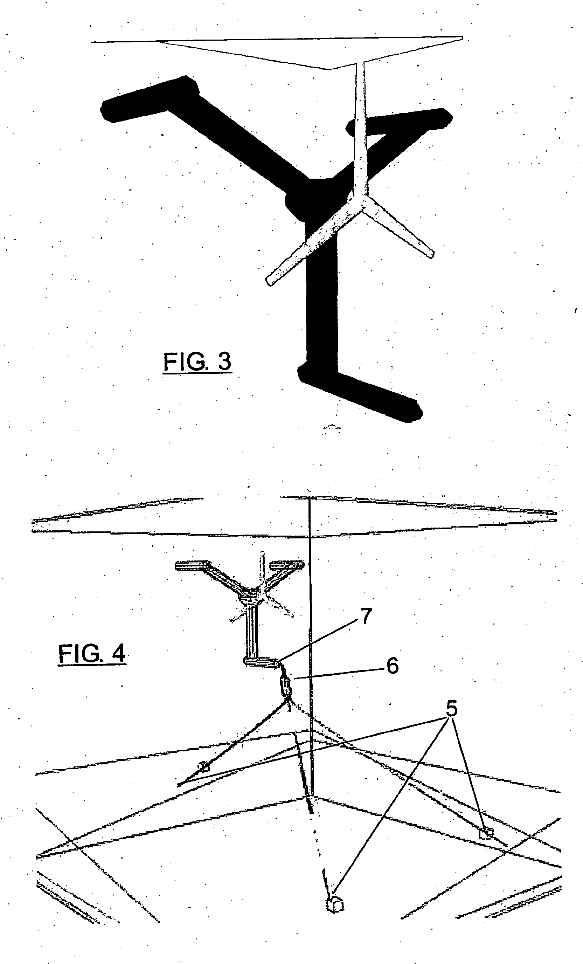

By means of asymmetrical design the ensemble can moored with only a link point on the outside lower torpedo end (figure 4), reducing the mooring lines length. In this design the rotor can work upstream of the structure, minimizing the hydrodynamics interference from the cables and link system and make easy the procedure for locking and unlocking the structure with the mooring system.

The mooring system can be designed with several lines (ropes or chains) linked to fixed points on sea bottom in order to operate with a little motion of the link point to the structure. At this point it will be an ancillary buoy that will maintain the mooring geometry when the generator ups to the sea surface. This buoy will incorporate the locking unlocking equipment.

With this design, we can use a short cable between the ancillary buoy and the torpedo and the rotation of every generator in order to follow the current direction and speed, don't causes a significative motion of the working position, in order to increase the number of generator on the generation field.

### Brief description of the drawings

Figure 1 shows the system basic design with:
   (1) Rotor with several blades.
   (2) Central pod. Inside it is located the electrical generator moved by the rotor.
   (3) Structure arms, with oval section in order to reduce de current drag. Inside they will be the ancillary equipment and water ballast tanks.
   (4) End floats, with torpedo shape, inside they will be solid ballast and ballast tanks.
Figure 2 (from right to left and up to down) shows the steps for to take out the generator to the sea surface. By this it's opened the link between the generator and the mooring system and reduced the water ballast amount. With this operation the generator has an upward buoyancy force. Also, due to the water ballast change, it is achieved that the structure equilibrium state moves by itself from vertical to horizontal position.
   In order to deploy the generator, with the mooring system previously located, we start with the structure in horizontal on the sea surface. Moving the water ballast in the inverse sequence, we move the generator from horizontal to vertical and submerged it. Then, with the aid of a "guide rope", that links the structure with a mooring buoy, moved by a winch located at sea surface, could be engaged the structure to the mooring system.
Figure 3 shows a generator model designed Y-Z. It has three arms; with this number we have an optimal equilibrium when floating on horizontal between stability properties, simple construction and reduction of the drag force. As can see on figure 3, the buoyancy centre of every float is moved form they arm axis (in the current direction for upper ones and opposite for lower one). That asymmetrical design aids to reduce the tilt angle simplifies the mooring system.
Figure 4 shows a mooring system solution, made by, at least three hold points to sea bottom (5) linked by ropes to a buoy (6) and from this by other short rope to the generation unit (7). With this design we achieve a reduced generator movement form the equilibrium position without currents.

### Detailed description of embodiments of the invention

The system is made by aggregation of several elements technologically matures that are jointed in a specific matter that produce a specific result. For every element we can resume:
The rotor 1 could be similar to the wind generator and very large ship propellers. It could be based on composites (carbon fibber) and bronze.
The pod 2 design will be similar to the POD electric ship propulsion. Inside it will be the electric generator, jointed to the rotor 1 by a waterproof stern tube and a thrust bearing of naval type.

The arms 3 are based on an iron structure analogous to the offshore structures. Within them it will be the ballast tanks and some ancillary elements.

The water ballast management will be based on an air blowing system, like the used on submarines. It could be controlled by an automatic system linked by a cable or an underwater communication link.

The mooring system could be similar to the used on petrol offshore platforms and marine aquiculture nets. For instance, form the main link point could depart three ropes linked to three mooring points on the sea bottom 5.

The structure elements (pod 2, arms 3, and torpedoes 4) will be welded. The electric generator stator will be supported by means of an intermediate structure welded to the pod structure. To the main shaft will be jointed the electric generator rotor 1, and the rotor's blades by means of bolts.

The links ropes between the structure and the buoy 6 will be finished in a link equipment based on a quick release mechanism. The buoy 6 will be engaged to the bottom mooring 5 points by means or ropes or chains.

## Claims

1. Submergible electric energy generation unit for exploiting the energy of marine currents, said unit (7) comprising a rotor (1) with several blades, wherein the rotor (1) is connected to an electrical generator that is supported by an immersible star structure comprising at least three arms (3) extending from said generator in different radial directions, wherein said arms (3) are located in a plane perpendicular to the rotor's axis, wherein at the radial outer end of each arm (3) there is located a torpedo-shaped float (4), wherein the axis of each float (4) is parallel to the rotor axis, said submergible electric energy generation unit (7) **characterized in that** the structure is linked to a mooring system with a link point on an auxiliary buoy (6) of the mooring system and has a ballast system that enables to move the electric energy generation unit (7) from an immersed vertical position in operation to a floating horizontal position at the sea surface for maintenance, wherein said arms (3) and said floats (4) are adapted to be filled or emptied with water ballasts in order to enable said movement from the vertical to the horizontal position.

2. Submergible electric energy generation unit for exploiting the energy of marine currents, according to claim 1, **characterized in that** said submergible electric energy generation unit (7) being moveable from the floating horizontal position to the immersed vertical position by comprising means of controlled water ballast tanks, which modify the buoyancy and centre of weight of the unit (7), and **in that** the submergible electric energy generation unit (7) comprises a tele-controlled guide rope that links the structure to the mooring system.

3. Submergible electric energy generation unit for exploiting the energy of marine currents, according to any of the claims 1 to 2, **characterized in that** the rotor (1) comprises three blades and a structure with three arms (3), and the torpedo-shaped floats (4) are situated asymmetrically with reference to the arm's axis, in order to maintain vertically the structure, compensating with buoyancy forces the tilt momentum produced by the water current drag.

4. Submergible electric energy generation unit for exploiting the energy of marine currents, according to any of the claims 1 to 3, **characterized in that** the mooring system has several cables or chains that join on the link point, which allow the rotation of the structure around the link point, said link point maintaining its position by means of three or more mooring lines.

## Patentansprüche

1. Tauchende Elektroenergieerzeugungseinheit für die Nutzung der Energie aus Meeresströmungen, die Einheit (7) einen Rotor (1) mit mehreren Blättern umfassend, wobei der Rotor (1) an einen elektrischen Generator, der durch eine eintauchbare Sternstruktur, die mindestens drei Arme (3) umfasst, die sich von dem Generator aus in verschiedene radiale Richtungen ausbreiten, unterstützt wird, wobei die Arme (3) auf einer senkrecht zur Rotorachse verlaufenden Ebene angebracht sind, wobei am radialen äußeren Ende jedes Armes (3) ein torpedoförmiger Schwimmer (4) angebracht ist, wobei die Achse jedes Schwimmers (4) parallel zur Rotorachse liegt, angeschlossen ist, diese tauchende Elektroenergieerzeugungseinheit (7) **dadurch gekennzeichnet, dass** die Struktur an ein Verankerungssystem mit einem Anlenkpunkt auf einer Hilfsboje (6) des Verankerungssystems gekoppelt ist und ein Ballastsystem hat, das es ermöglicht, die Elektroenergieerzeugungseinheit (7) von der eingetauchten vertikalen Betriebsposition zu einer schwimmenden horizontalen Position auf der Meeresoberfläche zu Wartungszwecken zu bewegen, wobei die Arme (3) und die Schwimmer (4) angepasst sind, um mit Wasserballaste gefüllt oder entleert zu werden zwecks Ermöglichung dieser Bewegung von vertikaler zu horizontaler Position.

2. Tauchende Elektroenergieerzeugungseinheit für die Nutzung der Energie aus Meeresströmungen, nach Anspruch 1, **dadurch gekennzeichnet, dass** die tauchende Elektroenergieerzeugungseinheit (7), die von der schwimmenden horizontalen Position zur eingetauchten vertikalen Position bewegbar ist, Mittel gesteuerter Wasserballasttanks, die den Auftrieb und das Gewichtszentrum der Einheit (7) ändern, umfassend und dadurch, dass die tauchende Elektroenergieerzeugungseinheit (7) ein ferngesteuertes Führungsseil umfasst, das die Struktur an das Verankerungssystem koppelt.

3. Tauchende Elektroenergieerzeugungseinheit für die Nutzung der Energie aus Meeresströmungen, nach Ansprüchen 1 bis 2, **dadurch gekennzeichnet, dass** der Rotor (1) drei Blätter und eine Struktur mit drei Armen (3) umfasst, und die torpedoförmigen Schwimmer (4) asymmetrisch in Bezug auf die Achse des Arms angebracht sind, um die Struktur senkrecht zu halten, die Neigungsdynamik, hervorgerufen durch den Wasserströmungswiderstand, mit Auftriebskräften ausgleichend.

4. Tauchende Elektroenergieerzeugungseinheit für die Nutzung der Energie aus Meeresströmungen, nach einem der Ansprüche 1 bis 3, **dadurch gekennzeichnet, dass** das Verankerungssystem mehrere Seile oder Ketten hat, die an den Anlenkpunkt ankoppeln, was die Drehbewegung der Struktur um den Anlenkpunkt ermöglicht, der Anlenkpunkt mittels dreier oder mehrerer Verankerungsleinen seine Position haltend.

## Revendications

1. Unité de génération d'énergie électrique submersible pour exploiter l'énergie de courants marins, ladite unité (7) comprenant un rotor (1) à plusieurs lames, dans laquelle le rotor (1) est connecté à un générateur électrique qui est supporté par une structure immergeable en forme d'étoile comprenant au moins trois bras (3) s'étendant depuis ledit générateur dans différentes directions radiales, dans laquelle lesdits bras (3) sont situés sur un plan perpendiculaire à l'axe du rotor, dans laquelle à l'extrémité externe radiale de chaque bras (3) se trouve situé un flotteur en forme de torpille (4), dans laquelle l'axe de chaque flotteur (4) est parallèle à l'axe du rotor, ladite unité de génération d'énergie électrique submersible (7) **caractérisée en ce que** la structure est reliée à un système d'amarrage avec un point de liaison sur une bouée auxiliaire (6) du système d'amarrage et a un système de ballast qui permet de déplacer l'unité de génération d'énergie électrique (7) depuis une position verticale immergée en fonctionnement à une position horizontale de flottement à la surface de la mer pour maintenance, dans laquelle lesdits bras (3) et lesdits flotteurs (4) sont adaptés pour être remplis ou vidés avec des ballasts d'eau afin de permettre ledit mouvement depuis la position verticale à l'horizontale.

2. Unité de génération d'énergie électrique submersible pour exploiter l'énergie de courants marins, selon la revendication 1, **caractérisée en ce que** ladite unité de génération d'énergie électrique submersible (7) est déplaçable depuis la position horizontale de flottement à la position verticale immergée en comprenant des moyens de réservoirs de ballast d'eau commandés, qui modifient la flottabilité et le barycentre de l'unité (7), et **en ce que** l'unité de génération d'énergie électrique submersible (7) comprend une corde de guidage télécommandée qui relie la structure au système d'amarrage.

3. Unité de génération d'énergie électrique submersible pour exploiter l'énergie de courants marins, selon l'une quelconque des revendications 1 à 2, **caractérisée en ce que** le rotor (1) comprend trois lames et une structure à trois bras (3), et les flotteurs en forme de torpille (4) sont situés asymétriquement par rapport à l'axe du bras, afin de maintenir verticalement la structure, compensant avec des forces de flottabilité l'élan d'inclinaison produit par la traînée de courant d'eau.

4. Unité de génération d'énergie électrique submersible pour exploiter l'énergie de courants marins, selon l'une quelconque des revendications 1 à 3, **caractérisée en ce que** le système d'amarrage a plusieurs câbles ou chaînes qui se rejoignent sur le point de liaison, qui permet la rotation de la structure autour du point de liaison, ledit point de liaison maintenant sa position au moyen de trois lignes d'amarrage ou plus.
